# EUROPEAN PATENT SPECIFICATION

(11) **EP 0 504 937 B1**
(45) Date of publication and mention of the grant of the patent: **25.10.1995**
(21) Application number: 92104919.3
(22) Date of filing: 20.03.1992
(51) Int. Cl.: F23G 7/06

(54) **Method for catalytic combustion of combustibles in offgases**
Methode zur katalytischen Verbrennung von verbrennbaren Bestandteilen aus Abgasen
Méthode de combustion catalytique des composés combustibles des gaz d'échappement

(30) Priority: 22.03.1991 DK 525/91
(43) Date of publication of application: 23.09.1992
(73) Proprietor: Haldor Topsoe A/S, DK-2800 Lyngby (DK)
(72) Inventor: Schoubye, Peter, DK-2970 Horsholm (DK)
(74) Representative: Grünecker, Kinkeldey, Stockmair & Schwanhäusser Anwaltssozietät

(56) References cited:
- WO-A-90/12252
- DE-A- 2 543 761
- GB-A- 2 116 452

## Description

This invention relates to a method for combustion of combustibles such as organic solvents and hydrocarbons diluted in offgases containing an excess of oxygen. More particularly, the invention enables catalytic combustion of combustibles being present in the offgases with power production in an expansion turbine.

It is known to eliminate combustibles in offgases at atmospheric pressure and temperatures above 700°C to 900°C by thermal combustion, or by catalytic oxidation at temperatures in the range 200°C to 1000°C with catalysts containing platinum, palladium or oxides of copper, chromium and/or manganese (US-A-4,186,801; US-A-4,191,733 and GB-A-2 116 452).

It has also been proposed to combine thermal combustion of organic solvents diluted in air with expansion of the combusted air in gas turbines for production of electricity (EP-A-0 298,941, DE-A-2,543,761). The organic compounds containing air is, thereby, compressed to a pressure of between 3 to 20 bar abs in one or two steps with intercooling. The compressed air may then be heated by heat exchange with cleaned exhaust air from an expansion turbine, before it is further heated to 700°C to 1200°C in a combustion chamber using natural gas or oil as support fuel, which is burned in the chamber. The cleaned air leaving the combustion chamber at 700°C to 1200°C is, subsequently, expanded to atmospheric pressure in the expansion turbine, the power from which is utilized to compress the organic compounds containing air and to produce electric power.

The advantage of this method, compared to combustion at atmospheric pressure, is that part of the heating value of the combustibles in the air is converted into electric power.

However, this method has also some disadvantages and limitations:
The exit temperature from the combustion chamber must be above a certain minimum temperature in order to ensure sufficient destruction of all combustibles, including combustion of CO, which is often produced by thermal combustion of solvents. The minimum temperature for sufficient combustion is in practice between 700°C and 1000°C, depending on the type of combustibles, the content of combustibles in the air and the residence time of the gas in the combustion chamber. CO and hydrocarbons such as methane and ethane and some heat resistant organic compounds and chlorinated organic compounds require up to 1100°C for complete destruction by thermal combustion. High contents of combustibles corresponding to heating values of 400 to 1000 kJ/Nm³ of combustibles in the waste gas may also require temperatures of up to 1100°C, or more, in the combustion chamber and/or a very large combustion chamber in order to obtain complete combustion. This requires high consumption of support fuel and, furthermore, use of expensive high temperature turbines. High temperatures, and, in particular, the combustion by a support burner, results in high concentrations of nitrogen oxides (NOₓ) in the purified gas. Furthermore, rapid variations in the content of combustibles in the offgas in the range from 0 to above 300-400 kJ/Nm³ may cause transient excess temperatures in the catalyst bed, which can damage the catalyst and turbine.

An object of this invention is to provide an effective and economic method to eliminate combustibles in offgases of air and/or waste gases and utilize the heating values of the combustibles in offgases without the limitations and disadvantages of the known methods.

Accordingly, a broad embodiment of the invention is directed towards a method of eliminating combustibles in an offgas of air and/or waste gases by catalytic combustion, wherein the heating value of combustibles in the offgas is utilized for power production.

The method comprises the steps of:
compressing the offgas in a compressor;
heating the compressed offgas to a temperature required for subsequent catalytic combustion of the combustibles contained in the offgas;
combusting and eliminating the combustibles in the compressed and heated offgas by contact with a combustion catalyst arranged in a combustion chamber; and
expanding the combusted offgas to atmospheric pressure through a gas expansion turbine.

The catalysts used in the invention are preferably platinum and/or palladium catalysts impregnated in layers of less than 50 µm thickness on a porous, ceramic carrier material in the form of a monolithic structure or in the form of cylinders or spheres with a geometric surface of typically 2000 to 3000 m²/m³ arranged as fixed bed in the combustion chamber. Complete combustion is, thereby, obtained at space velocities of about 100,000 Nm³/h/m³ at 5 bar and inlet temperatures above 350°C and exit temperatures of 700-1100°C. Catalysts with copper, manganese and/or chromium as the active components may, preferably, be used in the combustion chamber within the temperature range from a minimum inlet temperature of 300°C to a maximum outlet temperature of 700°C.

Thus, in a preferred embodiment of the invention the offgas leaving the compressor is heated to between about 250°C and 600°C before intake in the combustion chamber.

The compressed offgas may, thereby, be heated in a heating chamber provided with a support burner or advantageously through heat exchange with the cleaned offgas from the expansion turbine.

In still a preferred embodiment of the invention the expansion turbine is connected to an electricity generator, wherein the energy contained in the combusted offgas is utilized to produce electric power.

In order to provide sufficient energy for the electricity production the exit temperature of the offgas from the combustion chamber should be in the range of 600°C and 1100°C. Thus, in still a preferred embodiment of the invention the combusted offgas leaving the catalytic combustion chamber is further heated to a temperature of between 600°C and 1200°C, preferably between 750°C and 1000°C, before the off-gas is expanded in the expansion turbine.

Heating of the combusted offgas may be performed in a heating chamber arranged between the combustion chamber and the turbine.

In an alternate embodiment of the invention the exit temperature of the combusted offgas is adjusted to a temperature of 600-1200°C, preferably 750-1000°C by premixing the offgas with gaseous fuel prior to the catalytic combustion. Thereby, the amount of combustibles in the offgas is increased, resulting in the desired exit temperatures in the offgas leaving the combustion chamber.

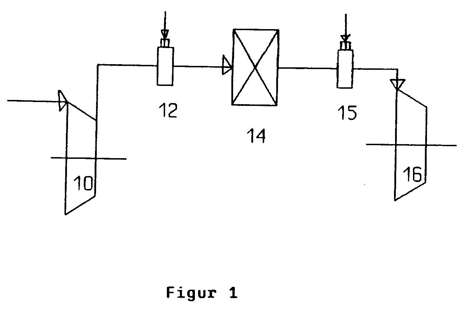

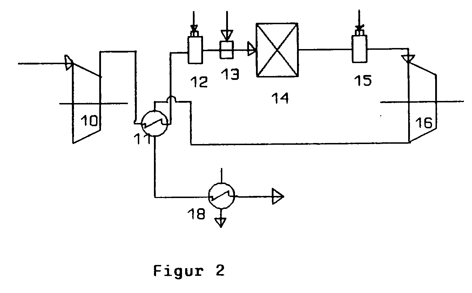

The above aspects and features of the invention will become more evident by the following description with reference to the attached drawings, in which
Fig. 1 and Fig. 2 are a schematic illustration of preferred embodiments thereof.

In a turbine plant shown on Fig. 1, waste gas containing combustibles in an amount corresponding to heating values of up to 800 kJ/Nm³ is first compressed in compressor 10, typically to 5 bar gauge, whereby the temperature of the gas rises from 40°C to about 240°C. The gas is further heated to 300°C by support burner 12 upstream of the catalytic combustion chamber 14. In the catalytic combustion chamber 14 more than 99% of the combustibles in the waste gas is oxidized to CO₂ and H₂O. Less than 50 ppm CO and less than 10 ppm NOₓ will be formed in the combustion chamber using one of the above mentioned catalysts. If the gas contains about 10 g of solvents with an average lower heating value of 30 kJ/g, the gas temperature of the clean gas after the combustion chamber will be about 510°C. The cleaned gas may be passed directly to expansion turbine 16 without further heating, or it may be heated to the maximum temperature acceptable for the turbine through heating by the support burner 15.

Fig. 2 shows a process diagram of a preferred embodiment of the invention carried out in a gas turbine plant, in which the exit temperature in the offgas from the combustion chamber is adjusted to a temperature desired in the expansion turbine for electric power production by injecting support fuel into the waste gas before the combustion chamber. The amount of combustibles is, thereby, increased and the temperature rises to 600-1100°C in the combustion chamber. The support fuel is injected into the waste gas in gaseous form such as natural gas, LPG or gaseous methanol, which will be completely oxidized by the catalyst in the chamber. Waste gas with amounts of combustibles varying between 0 and 800 kJ/Nm³ is compressed in compressor 10 and further heated to a maximum temperature of about 380°C in heat exchanger 11 by heat in the exhaust gas from gas turbine 16. The temperature of the gas leaving heat exchanger 11 is sufficient to obtain complete oxidation in catalyst chamber 14 without using burner 12, which is only used for start up. Support fuel, e.g. in the form of LPG, is mixed into the gas stream at injection point 13 in order to obtain the desired temperature (e.g. in the range 700°C to 900°C) upstream of the turbine 17. At a temperature of 900°C at the turbine inlet and a total amount of combustibles corresponding to 800 kJ/Nm³ in the gas upstream of catalyst chamber 14, the inlet temperature to the catalyst chamber must be 350°C. The maximum acceptable amount of combustibles in the gas, which can be burned is determined by the temperature span between the minimum inlet temperature into catalyst chamber 14 by which complete oxidation can be obtained in the catalyst, and the maximum acceptable inlet temperature into turbine 16. If the gas is expanded from 5 to 1 bar gauge in turbine 16, the temperature after turbine 16 will be about 500°C. The gas is then cooled first in heat exchanger 11, and subsequently, in heat exchanger 18, from which residual heat is exported as steam or hot water.

Burning the support fuel in the catalyst chamber instead of in a burner results in:
very low NOₓ formation during catalytic combustion as opposed to thermal combustion in a burner; and
in high exit temperatures from the catalytic combustion chamber, which can be kept constant at the desired inlet temperature for the gas turbine independently of changes in the content of combustibles in the waste gas by controlling the fuel injection, so that the heating value of the waste gas at the inlet to the combustion chamber is kept constant at a desired value.

Thereby, only one support burner 12 upstream of the catalyst chamber is required. The burner 12 may be supplemented or replaced by a heat exchanger heating the gas with heat from the gas turbine effluent gas.

## Claims

1. Method of eliminating combustibles contained in offgas of air and/or waste gases exclusively by catalytic combustion of the combustibles, comprising the steps of:
compressing the offgas in a compresser (10);
heating the offgas to a temperature required for subsequent catalytic combustion of the combustibles in the offgas;
combusting and eliminating the combustibles in the heated offgas by contact with a combustion catalyst arranged in a combustion chamber (14); and
expanding the combusted offgas to atmospheric pressure in a gas expansion turbine (16).

2. The method of claim 1, wherein the active combustion catalyst is selected from the group of platinum, palladium, copper, manganese and chromium.

3. The method of claim 2, wherein the catalyst is supported on a monolithic structured carrier.

4. The method of any of claims 1 to 3, wherein the compressed offgas is further heated to a temperature of between about 250°C and 600°C before intake in the combustion chamber (14).

5. The method of claim 4, wherein the compressed offgas is further heated in a heating chamber provided with a support burner (12).

6. The method of claim 4, wherein the compressed offgas is heated by indirect heat exchange (11) with the cleaned offgas from the expansion turbine (16).

7. The method of any of claims 1 to 6, wherein the expansion turbine (16) is connected to an electricity generator.

8. The method of claim 6, wherein the combusted offgas leaving the combustion chamber (14) is further heated to a temperature of between 600°C and 1200°C, preferably between 700°C and 1000°C, before the offgas is expanded in the expansion turbine (16).

9. The method of claim 7, wherein the combusted offgas is heated in a heating chamber provided with a support burner (15).

10. The method of claim 7, wherein the temperature of the combusted offgas is adjusted to a temperature of between 600° and 1200°C by premixing the compressed offgas with gaseous fuel prior to the catalytic combustion.

11. The method of claim 10, wherein the gaseous fuel is selected from natural gas, LPG and gaseous methanol.

## Patentansprüche

1. Verfahren zur ausschließlichen Entfernung von brennbaren Anteilen, die in Abgasen der Luft und/oder Rauchgasen enthalten sind, durch katalytische Verbrennung der brennbaren Anteile, umfassend die folgenden Schritte:
Komprimieren des Abgases in einem Kompressor (10);
Erhitzen des Abgases auf eine Temperatur, die für die anschließende katalytische Verbrennung der brennbaren Anteile in dem Abgas benötigt wird;
Verbrennen und Entfernen der brennbaren Anteile aus dem erhitzten Abgas durch Kontakt mit einem Verbrennungskatalysator, der in einer Verbrennungskammer (14) angeordnet ist; und
Expandieren des verbrannten Abgases auf Atmosphärendruck in einer Gas-Expansionsturbine (16).

2. Verfahren nach Anspruch 1, worin der aktive Verbrennungskatalysator gewählt ist aus der Gruppe, bestehend aus Platin, Palladium, Kupfer, Mangan und Chrom.

3. Verfahren nach Anspruch 2, worin der Katalysator auf einen monolitisch strukturierten Träger aufgebracht ist.

4. Verfahren nach einem der Ansprüche 1 bis 3, worin das komprimierte Abgas vor dem Eintritt in die Verbrennungskammer (14) weiter auf eine Temperatur zwischen etwa 250 und 600°C aufgeheizt wird.

5. Verfahren nach Anspruch 4, worin das komprimierte Abgas in einer Heizkammer mit einem unterstützenden Brenner (12) weiter aufgeheizt wird.

6. Verfahren nach Anspruch 4, worin das komprimierte Abgas durch indirekten Wärmeaustausch (11) mit dem gereinigten Abgas aus der Expansionsturbine (16) aufgeheizt wird.

7. Verfahren nach einem der Ansprüche 1 bis 6, worin die Expansionsturbine (16) mit einem Stromgenerator verbunden ist.

8. Verfahren nach Anspruch 6, worin das die Verbrennungskammer (14) verlassende verbrannte Abgas weiter auf eine Temperatur zwischen 600 und 1200°C, vorzugsweise zwischen 700 und 1000°C aufgeheizt wird, bevor das Abgas in der Expansionsturbine (16) expandiert wird.

9. Verfahren nach Anspruch 7, worin das verbrannte Abgas in einer Heizkammer, die mit einem unterstützenden Brenner (15) ausgestattet ist, erhitzt wird.

10. Verfahren nach Anspruch 7, worin die Temperatur des verbrannten Abgases auf eine Temperatur zwischen 600 und 1200°C eingestellt wird durch Vormischen des komprimierten Abgases mit gasförmigem Treibstoff vor der katalytischen Verbrennung.

11. Verfahren nach Anspruch 10, worin der gasförmige Treibstoff gewählt ist aus natürlichem Gas, LPG und gasförmigem Methanol.

## Revendications

1. Procédé d'élimination des composés combustibles contenus dans un gaz d'échappement d'air et/ou des gaz résiduels exclusivement par une combustion catalytique des composés combustibles, comprenant les étapes consistant à :
comprimer le gaz d'échappement dans un compresseur (10) ;
chauffer le gaz d'échappement à une tempéraure requise pour une combustion catalytique ultérieure des composés combustibles du gaz d'échappement ;
brûler et éliminer les composés combustibles du gaz d'échappement chauffé par contact avec un catalyseur de combustion disposé dans une chambre de combustion (14); et
détendre le gaz d'échappement brûlé à la pression atmosphérique dans une turbine à expansion de gaz (16).

2. Procédé selon la revendication 1, dans lequel le catalyseur de combustion actif est choisi dans le groupe constitué de platine, de palladium, de cuivre, de manganèse et de chrome.

3. Procédé selon la revendication 2 , dans lequel le catalyseur est supporté sur un support de structure monolithique.

4. Procédé selon l'une quelconque des revendications 1 à 3, dans lequel le gaz d'échappement comprimé est encore chauffé à une température comprise entre environ 250°C et 600°C avant d'entrer dans la chambre de combustion (14).

5. Procédé selon la revendication 4 , dans lequel le gaz d'échappement comprimé est chauffé davantage dans une chambre de chauffage prévue avec un brûleur de soutien (12).

6. Procédé selon la revendication 4 , dans lequel le gaz d'échappement comprimé est chauffé par un échange indirect de chaleur (11) avec le gaz d'échappement purifié venant de la turbine à expansion (16).

7. Procédé selon l'une quelconque des revendications 1 à 6, dans lequel la turbine à expansion (16) est connectée à un générateur d'électricité.

8. Procédé selon la revendication 6, dans lequel le gaz d'échappement brûlé quittant la chambre de combustion (14) est chauffé de façon supplémentaire à une température comprise entre 600°C et 1200°C , de préférence entre 700°C et 1000°C , avant que le gaz d'échappement ne soit détendu dans la turbine à expansion (16).

9. Procédé selon la revendication 7, dans lequel le gaz d'échappement brûlé est chauffé dans une chambre de chauffage prévue avec un brûleur de soutien (15).

10. Procédé selon la revendication 7, dans lequel la température du gaz d'échappement brûlé est réglée à une température comprise entre 600°C et 1200°C en mélangeant au préalable le gaz d'échappement comprimé avec un combustible gazeux avant la combustion catalytique.

11. Procédé selon la revendication 10, dans lequel le combustible gazeux est choisi à partir de gaz naturel, de GPL et de méthanol gazeux.
